# EUROPÄISCHE PATENTSCHRIFT

(11) **EP 3 351 446 B1**
(45) Veröffentlichungstag und Bekanntmachung des Hinweises auf die Patenterteilung: **25.01.2023**
(21) Anmeldenummer: 17197203.7
(22) Anmeldetag: 19.10.2017
(51) Int. Cl.: B60W 10/02, B60W 20/40, B60W 50/00

(54) **VERFAHREN ZUM BETREIBEN EINER ANTRIEBSEINRICHTUNG FÜR EIN KRAFTFAHRZEUG SOWIE ENTSPRECHENDE ANTRIEBSEINRICHTUNG**
METHOD FOR OPERATING A DRIVE DEVICE FOR A MOTOR VEHICLE AND CORRESPONDING DRIVE DEVICE
PROCÉDÉ DE FONCTIONNEMENT D'UN DISPOSITIF D'ENTRAÎNEMENT POUR VÉHICULE AUTOMOBILE ET DISPOSITIF D'ENTRAÎNEMENT CORRESPONDANT

(30) Priorität: 23.01.2017 DE 102017200982
(43) Veröffentlichungstag der Anmeldung: 25.07.2018
(73) Patentinhaber: AUDI AG, 85045 Ingolstadt (DE)
(72) Erfinder: Schneider, Michael, 85134 Stammham (DE); Kaartometsä, Henrik, 85080 Gaimersheim (DE); Brückl, Bernhard, 85302 Gerolsbach (DE)

(56) Entgegenhaltungen:
- EP-A2- 2 011 681
- EP-B1- 2 011 681
- WO-A1-2007/099003
- DE-A1- 10 161 982
- DE-A1- 10 230 611
- DE-A1-102011 079 079

## Beschreibung

Die Erfindung betrifft ein Verfahren gemäß Anspruch 1.

Die Erfindung betrifft weiterhin eine Antriebseinrichtung.

Aus dem Stand der Technik ist beispielsweise die Druckschrift EP 2 011 681 A2 bekannt. Diese beschreibt ein Verfahren zur Betätigung einer Startkupplung im Antriebsstrang eines Hybridfahrzeugs, wobei während einer Startphase der Brennkraftmaschine mittels einer Elektromaschine die zwischen diesen wirksam angeordnete Startkupplung in einer ersten Startphase mittels einer Vorsteuerung und in einer zweiten Startphase in Abhängigkeit von der Beschleunigung der Kurbelwelle der Brennkraftmaschine geschlossen wird. Die Antriebseinrichtung dient dem Antreiben des Kraftfahrzeugs, insoweit also dem Bereitstellen eines auf das Antreiben des Kraftfahrzeugs gerichteten Drehmoments. Die Antriebseinrichtung verfügt über mehrere Antriebsaggregate, wobei ein erstes der Antriebsaggregate als Brennkraftmaschine und ein zweites der Antriebsaggregate als elektrische Maschine ausgestaltet ist. Die Antriebseinrichtung liegt insoweit als Hybridantriebseinrichtung vor. Zusätzlich zu den Antriebsaggregaten verfügt die Antriebseinrichtung über das Gangwechselgetriebe, welches wiederum eine Getriebeeingangswelle und eine Getriebeausgangswelle aufweist. Mithilfe des Gangwechselgetriebes sind zwischen der Getriebeeingangswelle und der Getriebeausgangswelle unterschiedliche Übersetzungen einstellbar beziehungsweise eine aus mehreren unterschiedlichen Übersetzungen ausgewählte Übersetzung einstellbar.

Die Brennkraftmaschine verfügt über die Antriebswelle, welche beispielsweise einer Kurbelwelle der Brennkraftmaschine entspricht oder mit dieser gekoppelt ist, vorzugsweise starr und/oder permanent. Die elektrische Maschine weist dagegen die Maschinenwelle auf, welche wiederum mit einem Rotor der elektrischen Maschine gekoppelt ist, bevorzugt ebenso starr und/oder permanent. Die Antriebswelle der Brennkraftmaschine und die Maschinenwelle der elektrischen Maschine sind mittels der Schaltkupplung koppelbar. Das bedeutet, dass in dem zweiten Schaltzustand der Schaltkupplung die Antriebswelle mit der Maschinenwelle gekoppelt ist, vorzugsweise starr, also drehfest beziehungsweise schlupffrei. Hierzu kann in dem zweiten Schaltzustand - bei entsprechender Ausgestaltung der Schaltkupplung, beispielsweise als Lamellenkupplung - eine Kupplungsüberpressung der Schaltkupplung vorgesehen sein, sodass bei während des Betriebs der Antriebseinrichtung üblicherweise auftretenden Drehmomenten kein Kupplungsschlupf der Schaltkupplung auftritt.

In dem ersten Schaltzustand ist die Schaltkupplung dagegen zumindest teilweise, insbesondere vollständig, geöffnet. Bevorzugt ist also in dem ersten Schaltzustand die Antriebswelle von der Maschinenwelle vollständig entkoppelt. Die Maschinenwelle der elektrischen Maschine ist mit der Getriebeeingangswelle des Gangwechselgetriebes gekoppelt, vorzugsweise starr und/oder permanent, oder zumindest koppelbar. Die Getriebeausgangswelle des Gangwechselgetriebes wiederum ist mit der Abtriebswelle der Antriebseinrichtung gekoppelt, insbesondere starr und/oder permanent, und/oder zumindest koppelbar.

Unter der Abtriebswelle der Antriebseinrichtung ist eine Welle zu verstehen, an welcher die Antriebseinrichtung das zum Antreiben des Kraftfahrzeugs zu verwendende Antriebsdrehmoment bereitstellt. Insoweit ist die Abtriebswelle beispielsweise mit einer Radachse des Kraftfahrzeugs oder zumindest einem Rad des Kraftfahrzeugs gekoppelt, insbesondere starr und/oder permanent, oder zumindest koppelbar. Beispielsweise ist die Maschinenwelle einerseits der elektrischen Maschine an die Schaltkupplung und andererseits der elektrischen Maschine an die Getriebeeingangswelle angeschlossen. Die elektrische Maschine kann zu der Getriebeeingangswelle koaxial angeordnet sein. Auch andere Anordnungen der elektrischen Maschine sind jedoch realisierbar.

Es ist Aufgabe der Erfindung, ein Verfahren zum Betreiben einer Antriebseinrichtung für ein Kraftfahrzeug vorzuschlagen, welches gegenüber bekannten Verfahren Vorteile aufweist, insbesondere ein schnelles Angleichen der Drehzahlen der Brennkraftmaschine und der elektrischen Maschine und/oder ein ruckfreies Ankoppeln der Brennkraftmaschine an die elektrische Maschine, insbesondere nach einem Start der Brennkraftmaschine, ermöglicht.

Dies wird erfindungsgemäß mit einem Verfahren mit den Merkmalen des Anspruchs 1 erreicht. Dabei ist vorgesehen, dass bei Unterschreiten eines Schwellenwerts durch einen Drehzahldifferenzgradienten einer Drehzahldifferenz zwischen der Drehzahl der Antriebswelle und der Drehzahl der Maschinenwelle und bei Überschreiten eines Drehzahldifferenzschwellenwerts durch die Drehzahldifferenz aus der ersten Betriebsart in eine zweite Betriebsart gewechselt wird, wobei der Drehzahldifferenzschwellenwert eine bei einem Einleiten des Umschaltens von dem ersten Schaltzustand in den zweiten Schaltzustand vorliegende Drehzahldifferenz zwischen der Drehzahl der Antriebswelle und der Drehzahl der Maschinenwelle ist, wobei das an der Schaltkupplung eingestellte Kupplungssolldrehmoment in der zweiten Betriebsart unabhängig von der Drehzahl der Brennkraftmaschine und der Drehzahl der elektrischen Maschine mittels einer Steuerung bestimmt wird, wobei die Steuerung das Kupplungssolldrehmoment anhand eines zeitabhängigen Drehmomentverlaufs kontinuierlich und mit konstanter Steigung erhöht.

Grundsätzlich ist vorgesehen, dass bei einem Umschalten von dem ersten Schaltzustand in den zweiten Schaltzustand ein an der Schaltkupplung eingestelltes Kupplungssolldrehmoment in einer ersten Betriebsart mittels einer Regelung und in einer zweiten Betriebsart mittels einer Steuerung bestimmt wird.

Für einen Start der Brennkraftmaschine wird diese beispielsweise zunächst angeschleppt, vorzugsweise bis auf eine Mindestdrehzahl oder eine Leerlaufdrehzahl. Unter der Mindestdrehzahl ist vorzugsweise eine Drehzahl der Brennkraftmaschine zu verstehen, ab welcher sie selbsttätig, also ohne Einfluss eines externen Drehmoments, ihre Drehzahl selbsttätig bei befeuertem Betrieb erhöhen kann. Die Leerlaufdrehzahl ist dagegen die Drehzahl der Brennkraftmaschine, welche üblicherweise an dieser eingestellt wird, wenn die Brennkraftmaschine nicht zum Bereitstellen des Antriebsdrehmoments an der Abtriebswelle beitragen soll. Die Leerlaufdrehzahl ist dabei üblicherweise höher als die Mindestdrehzahl und vorzugsweise derart gewählt, dass ein möglichst ruhiger und geräuscharmer Betrieb der Brennkraftmaschine vorliegt. Vor dem Start weist die Brennkraftmaschine üblicherweise eine Drehzahl auf, welche gleich Null oder zumindest kleiner als die Mindestdrehzahl und/oder die Leerlaufdrehzahl ist.

Das Anschleppen der Brennkraftmaschine erfolgt beispielsweise mittels eines Starters und/oder durch zumindest teilweises Schließen der Schaltkupplung. Es kann also vorgesehen sein, dass die Brennkraftmaschine mittels des Starters bei gleichzeitig geöffneter Schaltkupplung angeschleppt wird, oder dass - insbesondere sofern kein separater Starter vorhanden ist - das Anschleppen allein durch das zumindest teilweise Schließen der Schaltkupplung erfolgt. In letzterem Fall wird die Brennkraftmaschine insoweit insbesondere mithilfe der elektrischen Maschine oder mittels kinetischer Energie des Kraftfahrzeugs angeschleppt. Die Schaltkupplung kann grundsätzlich beliebig ausgestaltet sein, insbesondere liegt sie als kraftschlüssige Schaltkupplung, beispielsweise als Lamellenkupplung, vor.

Hat die Brennkraftmaschine eine Drehzahl erreicht, ab welcher sie ohne Anliegen eines externen Drehmoments betrieben werden kann, insbesondere also die Mindestdrehzahl, wird die Schaltkupplung geöffnet, insbesondere vollständig geöffnet, sofern dies nicht bereits vorher der Fall war. Anschließend wird die Drehzahl der Brennkraftmaschine an die Drehzahl der elektrischen Maschine beziehungsweise die Drehzahl der Antriebswelle an die Drehzahl der Maschinenwelle angeglichen. Anschließend soll die Schaltkupplung zur Kopplung der Brennkraftmaschine und der elektrischen Maschine geschlossen werden. Insoweit ist ein Umschalten von dem ersten Schaltzustand in den zweiten Schaltzustand vorgesehen.

Zusammenfassend ist es also mit Blick auf die Drehzahl der Brennkraftmaschine vorzugsweise vorgesehen, das Starten der Brennkraftmaschine einzuleiten, wenn diese eine Drehzahl aufweist, die kleiner ist als die Mindestdrehzahl, insbesondere gleich Null ist. Zum Starten wird die Schaltkupplung zumindest teilweise geschlossen, sodass die Brennkraftmaschine von der elektrischen Maschine angeschleppt wird, oder die Brennkraftmaschine mittels des Starters angeschleppt. Dies erfolgt in beiden Fällen so, dass sich die Drehzahl der Brennkraftmaschine erhöht. Hat die Brennkraftmaschine die Mindestdrehzahl oder die Leerlaufdrehzahl erreicht, wird die Schaltkupplung - sofern sie zuvor geschlossen wurde - wieder geöffnet, insbesondere vollständig, oder weiter offen gehalten. Nachfolgend wird die Brennkraftmaschine befeuert betrieben, sodass sich ihre Drehzahl beziehungsweise die Drehzahl der Antriebswelle weiter erhöht, nämlich in Richtung der Drehzahl der elektrischen Maschine beziehungsweise der Maschinenwelle. Anschließend wird die Schaltkupplung geschlossen, also die Antriebswelle mit der Maschinenwelle gekoppelt und mithin von dem ersten Schaltzustand in den zweiten Schaltzustand umgeschaltet.

Das Umschalten von dem ersten Schaltzustand in den zweiten Schaltzustand erfolgt insbesondere nach dem Starten der Brennkraftmaschine, kann jedoch grundsätzlich auch in anderen Betriebszuständen der Antriebseinrichtung erfolgen. Während des Umschaltens wird das Kupplungssolldrehmoment ermittelt und an der Schaltkupplung eingestellt. Das von der Schaltkupplung tatsächlich übertragene Kupplungsistdrehmoment wird auf das eingestellte Kupplungssolldrehmoment eingestellt, insbesondere auf das Kupplungssolldrehmoment gesteuert und/oder geregelt.

Beispielsweise ist es also insgesamt vorgesehen, zunächst die Brennkraftmaschine zu starten, beispielsweise bei wenigstens teilweise geschlossener Schaltkupplung mittels der elektrischen Maschine anzuschleppen, nämlich bis auf die Mindestdrehzahl. Anschließend wird die Schaltkupplung wieder geöffnet, insbesondere vollständig geöffnet, sodass der erste Schaltzustand vorliegt. Nachfolgend wird die Drehzahl der Brennkraftmaschine auf die Drehzahl der elektrischen Maschine eingestellt. Sobald eine Drehzahldifferenz zwischen den beiden Drehzahlen eine bestimmte Drehzahldifferenz unterschreitet, wird das Umschalten von dem ersten Schaltzustand in den zweiten Schaltzustand eingeleitet.

Während des Umschaltens wird nun das Kupplungssolldrehmoment, welches in dem ersten Schaltzustand gleich Null ist, erhöht, insbesondere bis auf einen Wert, bei welchem ein schlupffreier Betrieb der Schaltkupplung vorliegt. Ist der schlupffreie Betrieb der Schaltkupplung erreicht, so kann nachfolgend zudem eine Kupplungsüberpressung eingestellt werden, mittels welcher bei während des Betriebs der Antriebseinrichtung üblicherweise auftretenden Drehmomenten kein Schlupf der Schaltkupplung zu erwarten ist.

Das an der Schaltkupplung einzustellende beziehungsweise eingestellte Kupplungsdrehmoment wird in der ersten Betriebsart mittels der Regelung und in der zweiten Betriebsart mittels der Steuerung bestimmt. Im Rahmen der Regelung ist es beispielsweise vorgesehen, die Drehzahldifferenz zwischen der Drehzahl der Brennkraftmaschine und der Drehzahl der elektrischen Maschine beziehungsweise der Drehzahl der Antriebswelle und der Drehzahl der Maschinenwelle als Regeldifferenz zu verwenden. Insoweit soll im Rahmen der Regelung das als Stellgröße dienende Kupplungssolldrehmoment derart regelnd eingestellt werden, dass die Drehzahl der Brennkraftmaschine der Drehzahl der elektrischen Maschine entspricht.

In der zweiten Betriebsart, welche alternativ zu der ersten Betriebsart durchführbar ist, erfolgt das Bestimmen des Kupplungssolldrehmoments dagegen mithilfe der Steuerung. Das bedeutet, dass das Kupplungssolldrehmoment unabhängig von der Drehzahl der Brennkraftmaschine und/oder der Drehzahl der elektrischen Maschine ermittelt und an der Schaltkupplung eingestellt wird. Vorzugsweise erfolgt das Durchführen der zweiten Betriebsart und mithin das Bestimmen des Kupplungssolldrehmoments mittels der Steuerung bis zum vollständigen Schließen der Schaltkupplung, also bis zum Erreichen eines Kupplungssolldrehmoments, bei welchem kein Kupplungsschlupf der Schaltkupplung mehr auftritt.

Im Rahmen der Steuerung ist ein bestimmter Verlauf des Kupplungssolldrehmoments über der Zeit hinterlegt. Es kann auch vorgesehen sein, zu Beginn der zweiten Betriebsart einmalig den Verlauf des Kupplungssolldrehmoments über der Zeit festzulegen, beispielsweise unter Verwendung der Drehzahl der Brennkraftmaschine und/oder der Drehzahl der elektrischen Maschine beziehungsweise der Drehzahldifferenz zwischen diesen beiden Drehzahlen. Anschließend wird das Kupplungssolldrehmoment allein mittels der Steuerung auf Grundlage dieses Verlaufs ermittelt.

Das Ermitteln und Einstellen des Kupplungssolldrehmoments erfolgt vorzugsweise periodisch oder kontinuierlich, wird also bevorzugt wiederholt und insoweit mehrfach durchgeführt, bis die Schaltkupplung vollständig geschlossen ist. Mittels einer derartigen Vorgehensweise kann in allen Betriebszuständen der Antriebseinrichtung ein rasches und ruckfreies Schließen der Schaltkupplung bei dem Umschalten von dem ersten Schaltzustand in den zweiten Schaltzustand erzielt werden.

Die Erfindung sieht vor, dass die Steuerung eine Erhöhung des Kupplungssolldrehmoments anhand eines zeitabhängigen Drehmomentverlaufs durchführt. Auf die Verwendung eines derartigen Drehmomentverlaufs wurde vorstehend bereits hingewiesen. Beispielsweise wird der Drehmomentverlauf zu Beginn der Durchführung der zweiten Betriebsart einmal ermittelt und anschließend zum Bestimmen des Kupplungssolldrehmoments mittels der Steuerung herangezogen. Beispielsweise wird der Drehmomentverlauf anhand des momentan von der Schaltkupplung übertragenen Kupplungsistdrehmoments, der Drehzahl der Brennkraftmaschine und/oder der Drehzahl der elektrischen Maschine ermittelt. Zudem kann ein konstanter Zeitraum vorgegeben werden, innerhalb welchem die Schaltkupplung vollständig geschlossen werden soll, ausgehend von dem momentanen Schaltzustand.

Der Drehmomentverlauf entspricht einer konstanten Erhöhung des Kupplungssolldrehmoments über der Zeit, also einem Anstieg des Kupplungssolldrehmoments mit konstantem Gradient. Die Länge des Zeitraums ist üblicherweise derart gewählt, dass zwar einerseits eine schnellstmögliche Synchronisierung zwischen der Brennkraftmaschine und der elektrischen Maschine erzielt wird, jedoch andererseits keine Beeinflussung einer Längsbeschleunigung des Kraftfahrzeugs auftritt, also keine für den Fahrer spürbare Verzögerung beziehungsweise Beschleunigung auftritt.

Im Rahmen der Erfindung ist vorgesehen, dass die Steuerung das Kupplungssolldrehmoment kontinuierlich und mit konstanter Steigung erhöht. Unter der kontinuierlichen Erhöhung des Kupplungssolldrehmoments ist ein unablässiges Erhöhen zu verstehen, sodass also der zeitliche Gradient des Kupplungssolldrehmoments stets von Null verschieden ist, insbesondere größer als Null ist. Das Erhöhen des Kupplungssolldrehmoments erfolgt zudem bevorzugt stetig, also ohne dass Sprünge beziehungsweise Unstetigkeiten in dem Verlauf des Kupplungssolldrehmoments auftreten. Dies kann besonders einfach durch das Erhöhen des Kupplungssolldrehmoments mit konstanter Steigung, also mit konstantem Gradienten über der Zeit, realisiert werden.

Die Erfindung sieht vor, dass bei dem Umschalten zunächst die erste Betriebsart durchgeführt wird und bei Unterschreiten eines Schwellenwerts durch einen Drehzahldifferenzgradienten die Drehzahldifferenz und bei Überschreiten eines Drehzahldifferenzschwellenwerts durch die Drehzahldifferenz aus der ersten Betriebsart in die zweite Betriebsart gewechselt wird. Wird das Umschalten von dem ersten Schaltzustand in den zweiten Schaltzustand eingeleitet, so soll also zunächst die erste Betriebsart herangezogen werden, also das Kupplungssolldrehmoment mittels der Regelung ermittelt werden.

Bei Zutreffen beider der genannten Bedingungen ist es nun vorgesehen, dass aus der ersten Betriebsart in die zweite Betriebsart gewechselt wird, also nachfolgend das Kupplungssolldrehmoment mittels der Steuerung bestimmt wird. Eine Bedingung ist dass der Drehzahldifferenzgradient den Schwellenwert unterschreitet. Der Drehzahldifferenzgradient ist der zeitliche Gradient der Drehzahldifferenz, also der Differenz zwischen der Drehzahl der Antriebswelle und der Drehzahl der Maschinenwelle. Ist der Drehzahldifferenzgradient kleiner als der Schwellenwert, so kann darauf geschlossen werden, dass das Angleichen der Drehzahlen in der ersten Betriebsart nicht ausreichend schnell vorgenommen wird.

Die andere Bedingung ist, dass die Drehzahldifferenz den Drehzahldifferenzschwellenwert überschreitet. Der Drehzahldifferenzschwellenwert wird gleich der Drehzahldifferenz bei dem Einleiten des Umschaltens gesetzt. Wird also festgestellt, dass sich die Drehzahldifferenz trotz des Durchführens der Regelung in der ersten Betriebsart wieder vergrößert, so kann nachfolgend in die zweite Betriebsart gewechselt werden, um das Angleichen der Drehzahlen rascher zu bewerkstelligen.

Eine weitere Ausgestaltung der Erfindung sieht vor, dass die Regelung unter Verwendung eines P-Regelglieds und/oder eines I-Regelglieds erfolgt und/oder vorgesteuert wird. Als Eingangsgrößen für das Regelglied beziehungsweise die Regelglieder dient, wie vorstehend bereits erläutert, die Drehzahldifferenz als Regeldifferenz. Die Regelung ermittelt das Kupplungssolldrehmoment als Stellgröße, welches nachfolgend an der Schaltkupplung eingestellt wird. Zusätzlich zu dem wenigstens einen Regelglied kann eine Vorsteuerung im Rahmen der Regelung vorgesehen sein. Beispielsweise kann es zunächst vorgesehen sein, die Regelung allein mittels des P-Regelglieds vorzunehmen, wobei optional die Vorsteuerung erfolgt. Sobald festgestellt wird, dass die Drehzahldifferenz nicht ausreichend schnell verringert werden kann, so kann zusätzlich das I-Regelglied herangezogen werden.

Eine weitere bevorzugte Ausgestaltung der Erfindung sieht vor, dass bei einer kleineren Drehzahldifferenz zwischen der Drehzahl der Antriebswelle und der Drehzahl der Maschinenwelle eine größere Steigung verwendet wird als bei einer größeren Drehzahldifferenz. Insoweit ist bei einer ersten Drehzahldifferenz eine schnellere Erhöhung des Kupplungssolldrehmoments vorgesehen als bei einer zweiten Drehzahldifferenz, wobei die erste Drehzahldifferenz kleiner ist als die zweite Drehzahldifferenz. Umgekehrt ist also bei der größeren zweiten Drehzahldifferenz ein langsameres Erhöhen des Kupplungssolldrehmoments realisiert. Mit einer derartigen Vorgehensweise wird eine rasche Überbrückung lediglich geringer Drehzahldifferenzen realisiert und zugleich - bei größeren Drehzahldifferenzen - ein sanftes Angleichen der Drehzahl der Antriebswelle an die Drehzahl der Maschinenwelle realisiert.

Eine bevorzugte weitere Ausgestaltung der Erfindung sieht vor, dass nach dem Wechseln in die zweite Betriebsart diese über eine bestimmte Zeitspanne hinweg durchgeführt und anschließend in die erste Betriebsart gewechselt wird oder die zweite Betriebsart bis zum Erreichen des zweiten Schaltzustands durchgeführt wird. Insoweit kann die zweite Betriebsart im Rahmen einer ersten Ausführungsform lediglich hilfsweise durchgeführt werden, um übergangsweise ein rascheres Angleichen der Drehzahlen zu erzielen, wohingegen das vollständige Umschalten in den zweiten Schaltzustand beziehungsweise das vollständige Schließen der Schaltkupplung in der ersten Betriebsart durchgeführt wird.

Entsprechend ist es beispielsweise vorgesehen, nach dem Wechseln in die zweite Betriebsart diese über die bestimmte Zeitspanne hinweg durchzuführen und anschließend erneut in die erste Betriebsart zu wechseln, nämlich bevor der zweite Schaltzustand erreicht ist. Die bestimmte Zeitspanne kann dabei eine konstante Zeitdauer aufweisen, beispielsweise wird die Zeitdauer beziehungsweise die Länge der Zeitspanne anhand der Drehzahldifferenz bei dem Wechsel in die zweite Betriebsart festgelegt. Alternativ kann es vorgesehen sein, die zweite Betriebsart bis zum Erreichen des zweiten Schaltzustands durchzuführen, sobald erst einmal aus der ersten Betriebsart in die zweite Betriebsart gewechselt wurde. Entsprechend soll das vollständige Schließen der Schaltkupplung in der zweiten Betriebsart erfolgen.

Eine Weiterbildung der Erfindung sieht vor, dass ein zum Starten der Brennkraftmaschine verwendetes, an der Schaltkupplung mindestens einzustellendes Kupplungsmindestdrehmoment aus einer Temperatur und/oder einer - insbesondere im Stillstand der Brennkraftmaschine vorliegenden - Kurbelwellenstellung der Brennkraftmaschine ermittelt wird. Das Kupplungsmindestdrehmoment ist das Drehmoment, welches mittels der Schaltkupplung mindestens übertragen werden soll. Entsprechend ist es bevorzugt vorgesehen, dass das Kupplungssolldrehmoment stets größer oder gleich dem Kupplungsmindestdrehmoment gewählt wird beziehungsweise das Kupplungsmindestdrehmoment nach seinem Ermitteln derart modifiziert wird, dass es zumindest dem Kupplungsmindestdrehmoment entspricht oder größer ist. Ein tatsächlich über die Schaltkupplung übertragenes Kupplungsistdrehmoment wird vorzugsweise auf das Kupplungssolldrehmoment eingestellt, insbesondere steuernd und/oder regelnd.

Das Kupplungsmindestdrehmoment wird nun anhand der Temperatur und/oder der Kurbelwellenstellung der Brennkraftmaschine bestimmt. Beispielsweise ist das Kupplungsmindestdrehmoment umso höher, je niedriger die Temperatur ist. Als Temperatur wird beispielsweise eine Brennkraftmaschinentemperatur der Brennkraftmaschine, beispielsweise eine Schmiermitteltemperatur, herangezogen. Zusätzlich oder alternativ wird die Kurbelwellenstellung herangezogen, welche vor dem Starten, insbesondere im Stillstand der Brennkraftmaschine, vorliegt.

Die Kurbelwellenstellung beschreibt beispielsweise einen Drehwinkel, um welchen die Kurbelwelle der Brennkraftmaschine gedreht werden muss, bis für denjenigen Zylinder der obere Totpunkt erreicht ist, in welchem zuerst eine Verdichtung und/oder Kraftstoffeinspritzung vorgenommen wird. Bei kleinem Drehwinkel muss weniger Gemisch verdichtet werden als bei großem Drehwinkel, weil der erste zu befeuernde Zylinder kurz vor seinem oberen Totpunkt steht. Entsprechend wird das Kupplungsmindestdrehmoment umso kleiner gewählt, je kleiner der Drehwinkel ist.

Eine weitere bevorzugte Ausgestaltung der Erfindung sieht vor, dass das Kupplungsmindestdrehmoment nach oben korrigiert wird, wenn die Drehzahl der Brennkraftmaschine zu Beginn des Startens größer als Null ist oder eine Zeitdauer nach einem Abstellen eine Vorgabezeitdauer unterschreitet, wobei das Kupplungsmindestdrehmoment umso größer gewählt wird, je weiter die Zeitdauer die Vorgabezeitdauer unterschreitet. Vorstehend wurde bereits dargelegt, dass das Starten der Brennkraftmaschine aus einer beliebigen Ausgangsdrehzahl heraus erfolgen kann. Liegt ein dem Starten vorhergehendes Abstellen der Brennkraftmaschine erst kurze Zeit zurück, ist die Drehzahl grö-ßer als Null. Entsprechend liegt in dem nächsten Zylinder, in welchem eine Verdichtung vorgenommen werden soll, bereits ein vorverdichtetes Gemisch vor.

Dies macht eine Erhöhung des Kupplungssolldrehmoments notwendig. Beispielsweise erfolgt die Erhöhung des Kupplungssolldrehmoments innerhalb eines bestimmten Drehzahlbereichs der Brennkraftmaschine. Dieser Drehzahlbereich weist als untere Grenze beispielsweise eine Drehzahl von größer als Null, insbesondere infinitesimal größer als Null, auf, bei welcher sich die Brennkraftmaschine bei ihrem Auslaufen gerade noch in Bewegung befindet.

Als obere Grenze kann der Drehzahlbereich eine Drehzahl aufweisen, die kleiner ist als die Mindestdrehzahl und/oder die Leerlaufdrehzahl. Insbesondere beträgt die Drehzahl höchstens 75 %, höchstens 50 %, höchstens 40 %, höchstens 30 % oder höchstens 25 % der Mindestdrehzahl. Überschreitet die Drehzahl der Brennkraftmaschine den Drehzahlbereich, liegt also oberhalb von diesem, so kann auf das Erhöhen des Kupplungssolldrehmoments verzichtet werden, weil die noch rotierenden Massen der Brennkraftmaschine das Starten unterstützen.

Ist beim Auslaufen der Brennkraftmaschine eine Drosselklappe geöffnet, so werden die Zylinder der Brennkraftmaschine noch mit der vollen Luftfüllung versorgt. Entsprechend liegt eine vorverdichtete Luftfüllung in dem ersten zu verdichtenden Zylinder vor. Diese erhöhte Füllung wird nach Stehenbleiben der Brennkraftmaschine langsam über Undichtigkeiten des Zylinders, beispielsweise der Zylinderdichtungen, abgebaut. Die erhöhte Füllung im ersten zu verdichtenden Zylinder soll bei der Berechnung des Kupplungsmindestdrehmoments berücksichtigt werden. Entsprechend wird die Zeitdauer nach einem dem Starten vorhergehenden Abstellen berücksichtigt und das Kupplungsmindestdrehmoment nach oben korrigiert, wenn die Zeitdauer die Vorgabezeitdauer unterschreitet. Es ist hierbei vorgesehen, dass das Kupplungsmindestdrehmoment umso größer gewählt wird, je weiter die Zeitdauer die Vorgabezeitdauer unterschreitet. Beispielsweise wird das Kupplungsmindestdrehmoment linear über der Zeit nach dem Abstellen der Brennkraftmaschine reduziert.

Eine weitere Ausführungsform der Erfindung, die nicht unter den Gegenstand des Schutzbegehrens fällt, sieht vor, dass ein mittels der elektrischen Maschine bereitstellbares Antriebsdrehmoment auf einen Drehmomentgrenzwert begrenzt wird, der aus einem maximalen Antriebsdrehmoment der elektrischen Maschine und einer Drehmomentreserve ermittelt wird.

Das Maximalantriebsdrehmoment entspricht dem maximalen mittels der elektrischen Maschine bereitstellbaren Drehmoment. Das Maximalantriebsdrehmoment entspricht dabei vorzugsweise einem Nenndrehmoment, bei welchem die elektrische Maschine dauerhaft und durchgehend betrieben werden kann.

Aus dem Maximalantriebsdrehmoment und der Drehmomentreserve wird der Drehmomentgrenzwert bestimmt. Der Drehmomentgrenzwert entspricht hierbei dem Maximalantriebsdrehmoment abzüglich der Drehmomentreserve. Durch das Vorsehen der Drehmomentreserve wird sichergestellt, dass stets ein zuverlässiges Starten der Brennkraftmaschine mithilfe der elektrischen Maschine möglich ist. Entsprechend wird das Antriebsdrehmoment, welches von der elektrischen Maschine erzeugt werden kann, auf den Drehmomentgrenzwert begrenzt.

Im Rahmen einer weiteren vorteilhaften Ausführungsform der Erfindung, die nicht unter den Gegenstand des Schutzbegehrens fällt, ist vorgesehen, dass die Drehmomentreserve aus einem zum Starten der Brennkraftmaschine benötigten Anschleppdrehmoment ermittelt wird. Das Anschleppdrehmoment entspricht dem Drehmoment, welches zum Anschleppen der Brennkraftmaschine benötigt wird, insbesondere zum Anschleppen auf die Mindestdrehzahl und/oder die Leerlaufdrehzahl. Die Drehmomentreserve wird nun beispielsweise gleich dem Anschleppdrehmoment gesetzt.

Eine weitere Ausgestaltung der Erfindung, die nicht unter den Gegenstand des Schutzbegehrens fällt, sieht vor, dass die Drehmomentreserve gleich dem Anschleppdrehmoment gesetzt wird, wenn ein Istdrehmoment der elektrischen Maschine kleiner ist als ein Maximalantriebsdrehmoment abzüglich dem Anschleppdrehmoment, und ansonsten gleich dem Maximalantriebsdrehmoment minus dem Istdrehmoment gesetzt und anschließend erhöht wird. Somit kann die Drehmomentreserve für den Fahrer des Kraftfahrzeugs unmerklich bereitgestellt werden, nämlich indem die Drehmomentreserve zunächst derart gewählt wird, dass sie das Istdrehmoment nicht beeinflusst und anschließend langsam erhöht wird, sodass das Istdrehmoment der elektrischen Maschine langsam abnimmt.

Die Erfindung betrifft weiterhin eine Antriebseinrichtung für ein Kraftfahrzeugs, insbesondere zur Durchführung des Verfahrens gemäß den vorstehenden Ausführungen, die eine Brennkraftmaschine und eine elektrische Maschine aufweist, wobei eine Antriebswelle der Brennkraftmaschine mittels einer Schaltkupplung mit einer Maschinenwelle der elektrischen Maschine koppelbar ist, wobei die Schaltkupplung in einem ersten Schaltzustand zur Entkopplung der Brennkraftmaschine und der elektrischen Maschine geöffnet und in einem zweiten Schaltzustand zur Kopplung der Brennkraftmaschine und der elektrischen Maschine geschlossen ist, wobei die Antriebseinrichtung dazu ausgebildet ist, bei einem Umschalten von dem ersten Schaltzustand in den zweiten Schaltzustand zunächst eine erste Betriebsart durchzuführen, in der ein an der Schaltkupplung eingestelltes Kupplungssolldrehmoment mittels einer Regelung bestimmt wird. Dabei ist vorgesehen, dass die Antriebseinrichtung weiterhin dazu ausgebildet ist, bei Unterschreiten eines Schwellenwerts durch einen Drehzahldifferenz gerade einer Drehzahldifferenz zwischen der Drehzahl der Antriebswelle und der Drehzahl der Maschinenwelle und bei Überschreiten eines Drehzahldifferenzschwellenwerts durch die Drehzahldifferenz aus der ersten Betriebsart in eine zweite Betriebsart zu wechseln, wobei der Drehzahldifferenzschwellenwert eine bei einem Einleiten des Umschaltens von dem ersten Schaltzustand in den zweiten Schaltzustand vorliegende Drehzahldifferenz zwischen der Drehzahl der Antriebswelle und der Drehzahl der Maschinenwelle ist, wobei das an der Schaltkupplung eingestellte Kupplungssolldrehmoment in der zweiten Betriebsart unabhängig von der Drehzahl der Brennkraftmaschine und der Drehzahl der elektrischen Maschine mittels einer Steuerung bestimmt wird, wobei die Steuerung dass Kupplungssolldrehmoment anhand eines zeitabhängigen Drehmomentverlauf kontinuierlich und mit konstanter Steigung erhöht.

Auf die Vorteile einer derartigen Vorgehensweise beziehungsweise einer derartigen Ausgestaltung der Antriebseinrichtung wurde bereits hingewiesen. Sowohl die Antriebseinrichtung als auch das Verfahren zu ihrem Betreiben können gemäß den vorstehenden Ausführungen weitergebildet sein, sodass insoweit auf diese verwiesen wird.

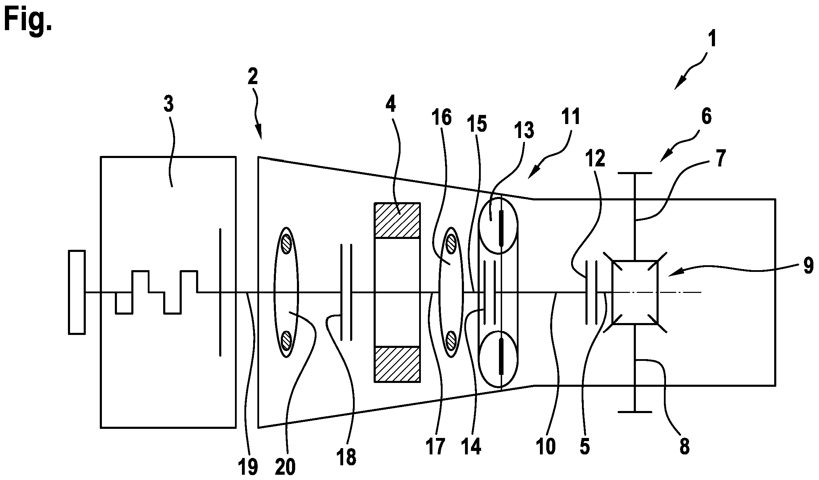

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung für ein Kraftfahrzeug.

Der Antriebsstrang 1 verfügt über eine Antriebseinrichtung 2, die wiederum eine Brennkraftmaschine 3, eine elektrische Maschine sowie eine Abtriebswelle 5 aufweist. Die Antriebseinrichtung 2 dient dem Antreiben wenigstens einer Radachse 6 des Kraftfahrzeugs, welche sich aus zwei Teilachsen 7 und 8 zusammensetzt, die über ein Differentialgetriebe 9 mit der Abtriebswelle 5 der Antriebseinrichtung 2 gekoppelt sind. Die Abtriebswelle 5 ist mit einer Getriebeausgangswelle 10 eines Gangwechselgetriebes 11 der Antriebseinrichtung 2 gekoppelt, insbesondere starr und/oder permanent und/oder mittels einer optionalen Schaltkupplung 12 koppelbar.

Das Gangwechselgetriebe 11 kann beispielsweise einen Drehmomentwandler 13 aufweisen, welcher über eine Wandlerüberbrückungskupplung 14 verfügen kann. Das Gangwechselgetriebe 11 verfügt über eine Getriebeeingangswelle 15, die vorzugsweise permanent mit dem Drehmomentwandler 13 gekoppelt ist. Die Getriebeeingangswelle 15 kann unmittelbar oder - wie hier dargestellt - über eine Dämpfungseinrichtung 16, beispielsweise einen Torsionsschwingungsdämpfer, mit einer Maschinenwelle 17 der elektrischen Maschine 4 gekoppelt sein, insbesondere starr und/oder permanent. Die elektrische Maschine 4 kann koaxial zu der Getriebeeingangswelle 15 und/oder der Getriebeausgangswelle 10 angeordnet sein.

Eine Wirkverbindung zwischen der Brennkraftmaschine 3 und der elektrischen Maschine 4 ist mittels einer Schaltkupplung 18 einstellbar. Die Schaltkupplung 18 liegt hierbei zwischen einer Antriebswelle 19 der Brennkraftmaschine 3 und der Maschinenwelle 17 der elektrischen Maschine 4 vor. In der Wirkverbindung zwischen der Brennkraftmaschine 3 und der Schaltkupplung 18 kann zudem eine weitere Dämpfungseinrichtung 20 optional vorgesehen sein. Die Dämpfungseinrichtung 20 ist vorzugsweise als Zweimassenschwungrad ausgeführt.

In einem ersten Schaltzustand der Schaltkupplung 18 ist die Brennkraftmaschine 3 von der elektrischen Maschine 4 entkoppelt. In einem zweiten Schaltzustand ist sie dagegen mit ihr gekoppelt. Entsprechend ist die Schaltkupplung 18 in dem ersten Schaltzustand geöffnet, insbesondere vollständig geöffnet, und in dem zweiten Schaltzustand wenigstens teilweise, vorzugsweise vollständig, geschlossen. Unter dem vollständigen Schließen kann ein Schließen der Schaltkupplung 18 mit oder ohne Kupplungsüberpressung verstanden werden.

Soll nun die Brennkraftmaschine 3 mit der elektrischen Maschine 4 gekoppelt werden, also von dem ersten Schaltzustand in den zweiten Schaltzustand gewechselt werden, so wird ein entsprechendes Umschalten vorgenommen. Das Umschalten erfolgt beispielsweise unmittelbar nach einem Starten der Brennkraftmaschine 4. Während des Umschaltens ist es vorgesehen, ein Kupplungssolldrehmoment in einer ersten Betriebsart mittels einer Regelung und in einer zweiten Betriebsart mittels einer Steuerung zu bestimmen und anschließend an der Schaltkupplung 18 einzustellen. Das Kupplungssolldrehmoment wird dabei kontinuierlich oder in diskreten Schritten wiederholt ermittelt und eingestellt.

Im Rahmen der Regelung ist es beispielsweise vorgesehen, das Kupplungssolldrehmoment unter Verwendung eines P-Regelglieds oder eines I-Regelglieds zu ermitteln. Zusätzlich kann eine Vorsteuerung vorgesehen sein. Die Steuerung sieht dagegen die Verwendung eines zeitabhängigen Drehmomentverlaufs vor, welcher beispielsweise eine durchgehend konstante Steigung aufweist, sodass das Kupplungssolldrehmoment ab dem Einleiten der zweiten Betriebsart, also ab dem Durchführen der Steuerung, kontinuierlich mit der konstanten Steigung erhöht wird, bis der zweite Schaltzustand erreicht und mithin die Schaltkupplung 18 vollständig geschlossen ist.

Auf diese Art und Weise kann in allen Betriebszuständen der Antriebseinrichtung 2 ein schnelles und komfortables Ankoppeln der Brennkraftmaschine 3 an die elektrische Maschine 4 beziehungsweise der Antriebswelle 19 an die Maschinenwelle 17 sichergestellt werden.

## Patentansprüche

1. Verfahren zum Betreiben einer Antriebseinrichtung (2) für ein Kraftfahrzeug, die eine Brennkraftmaschine (3) und eine elektrische Maschine (4) aufweist, wobei eine Antriebswelle (19) der Brennkraftmaschine (3) mittels einer Schaltkupplung (18) mit einer Maschinenwelle (17) der elektrischen Maschine (4) koppelbar ist, wobei die Schaltkupplung (18) in einem ersten Schaltzustand zur Entkopplung der Brennkraftmaschine (3) und der elektrischen Maschine (4) geöffnet und in einem zweiten Schaltzustand zur Kopplung der Brennkraftmaschine (3) und der elektrischen Maschine (4) geschlossen ist, wobei bei einem Umschalten von dem ersten Schaltzustand in den zweiten Schaltzustand zunächst eine erste Betriebsart durchgeführt wird, in der ein an der Schaltkupplung (18) eingestelltes Kupplungssolldrehmoment mittels einer Regelung bestimmt wird, wobei bei Unterschreiten eines Schwellenwerts durch einen Drehzahldifferenzgradienten einer Drehzahldifferenz zwischen der Drehzahl der Antriebswelle (19) und der Drehzahl der Maschinenwelle (17) und bei Überschreiten eines Drehzahldifferenzschwellenwerts durch die Drehzahldifferenz aus der ersten Betriebsart in eine zweite Betriebsart gewechselt wird, wobei der Drehzahldifferenzschwellenwert eine bei einem Einleiten des Umschaltens von dem ersten Schaltzustand in den zweiten Schaltzustand vorliegende Drehzahldifferenz zwischen der Drehzahl der Antriebswelle (19) und der Drehzahl der Maschinenwelle (17) ist, wobei das an der Schaltkupplung (18) eingestellte Kupplungssolldrehmoment in der zweiten Betriebsart unabhängig von der Drehzahl der Brennkraftmaschine (3) und der Drehzahl der elektrischen Maschine (4) mittels einer Steuerung bestimmt wird, wobei die Steuerung das Kupplungssolldrehmoment anhand eines zeitabhängigen Drehmomentverlaufs kontinuierlich und mit konstanter Steigung erhöht.

2. Verfahren nach Anspruch 1, wobei die Regelung unter Verwendung eines P-Regelglieds und/oder eines I-Regelglieds erfolgt und/oder vorgesteuert wird.

3. Verfahren nach einem der vorhergehenden Ansprüche, wobei bei einer kleineren Drehzahldifferenz zwischen der Drehzahl der Antriebswelle (19) und der Drehzahl der Maschinenwelle (17) eine größere Steigung verwendet wird als bei einer größeren Drehzahldifferenz.

4. Verfahren nach einem der vorhergehenden Ansprüche, wobei nach dem Wechseln in die zweite Betriebsart diese über eine bestimmte Zeitspanne hinweg durchgeführt und anschließend in die erste Betriebsart gewechselt wird oder die zweite Betriebsart bis zum Erreichen des zweiten Schaltzustands durchgeführt wird.

5. Verfahren nach einem der vorhergehenden Ansprüche, wobei ein zum Starten der Brennkraftmaschine (3) verwendetes, an der Schaltkupplung (18) mindestens einzustellendes Kupplungsmindestdrehmoment aus einer Temperatur und/oder einer, insbesondere im Stillstand der Brennkraftmaschine (3) vorliegenden, Kurbelwellenstellung der Brennkraftmaschine (3) ermittelt wird.

6. Verfahren nach Anspruch 5, wobei das Kupplungsmindestdrehmoment nach oben korrigiert wird, wenn die Drehzahl der Brennkraftmaschine (3) zu Beginn des Startens größer als Null ist oder eine Zeitdauer nach einem Abstellen eine Vorgabezeitdauer unterschreitet, wobei das Kupplungsmindestdrehmoment umso größer gewählt wird, je grö-ßer die Drehzahl zu Beginn des Startens ist und/oder je weiter die Zeitdauer die Vorgabezeitdauer unterschreitet.

7. Antriebseinrichtung (2) für ein Kraftfahrzeug, insbesondere zur Durchführung des Verfahrens nach einem oder mehreren der vorhergehenden Ansprüche, die eine Brennkraftmaschine (3) und eine elektrische Maschine (4) aufweist, wobei eine Antriebswelle (19) der Brennkraftmaschine (3) mittels einer Schaltkupplung (18) mit einer Maschinenwelle (17) der elektrischen Maschine (4) koppelbar ist, wobei die Schaltkupplung (18) in einem ersten Schaltzustand zur Entkopplung der Brennkraftmaschine (3) und der elektrischen Maschine (4) geöffnet und in einem zweiten Schaltzustand zur Kopplung der Brennkraftmaschine (3) und der elektrischen Maschine (4) geschlossen ist, wobei die Antriebseinrichtung (2) dazu ausgebildet ist, bei einem Umschalten von dem ersten Schaltzustand in den zweiten Schaltzustand zunächst eine erste Betriebsart durchzuführen, in der ein an der Schaltkupplung (18) eingestelltes Kupplungssolldrehmoment mittels einer Regelung bestimmt wird, wobei die Antriebseinrichtung (2) weiterhin dazu ausgebildet ist, bei Unterschreiten eines Schwellenwerts durch einen Drehzahldifferenzgradienten einer Drehzahldifferenz zwischen der Drehzahl der Antriebswelle (19) und der Drehzahl der Maschinenwelle (17) und bei Überschreiten eines Drehzahldifferenzschwellenwerts durch die Drehzahldifferenz aus der ersten Betriebsart in eine zweite Betriebsart zu wechseln, wobei der Drehzahldifferenzschwellenwert eine bei einem Einleiten des Umschaltens von dem ersten Schaltzustand in den zweiten Schaltzustand vorliegende Drehzahldifferenz zwischen der Drehzahl der Antriebswelle (19) und der Drehzahl der Maschinenwelle (17) ist, wobei das an der Schaltkupplung (18) eingestellte Kupplungssolldrehmoment in der zweiten Betriebsart unabhängig von der Drehzahl der Brennkraftmaschine (3) und der Drehzahl der elektrischen Maschine (4) mittels einer Steuerung bestimmt wird, wobei die Steuerung das Kupplungssolldrehmoment anhand eines zeitabhängigen Drehmomentverlaufs kontinuierlich und mit konstanter Steigung erhöht.

## Claims

1. Method for operating a drive apparatus (2) for a motor vehicle, which drive apparatus has an internal combustion engine (3) and an electric engine (4), wherein a drive shaft (19) of the internal combustion engine (3) can be coupled to a machine shaft (17) of the electric engine (4) by means of a shift clutch (18), wherein the shift clutch (18) is open in a first shift state for decoupling the internal combustion engine (3) and the electric engine (4) and is closed in a second shift state for coupling the internal combustion engine (3) and the electric engine (4), wherein, when a switch occurs from the first shift state to the second shift state, a first operating mode is firstly performed in which a clutch setpoint torque set on the shift clutch (18) is determined by means of closed-loop control, wherein, when a speed difference gradient of a speed difference between the speed of the drive shaft (19) and the speed of the engine shaft (17) falls below a threshold value and when the speed difference exceeds a speed difference threshold value, a change is made from the first operating mode to a second operating mode, wherein the speed difference threshold value is a speed difference between the speed of the drive shaft (19) and the speed of the engine shaft (17) when a switch occurs from the first shift state to the second shift state, wherein the clutch setpoint torque set on the shift clutch (18) is determined in the second operating mode independently of the speed of the internal combustion engine (3) and the speed of the electric engine (4) by means of open-loop control, wherein the open-loop control increases the clutch setpoint torque continuously and with a constant gradient on the basis of a time-dependent torque curve.

2. Method according to claim 1, wherein the closed-loop control is performed using a P-control element and/or an I-control element and/or is pre-controlled.

3. Method according to any of the preceding claims, wherein a greater gradient is used in the case of a smaller speed difference between the speed of the drive shaft (19) and the speed of the machine shaft (17) than in the case of a larger speed difference.

4. Method according to any of the preceding claims, wherein after the change to the second operating mode, the latter is performed over a specific time period and subsequently changed to the first operating mode or the second operating mode is performed until the second shift state is reached.

5. Method according to any of the preceding claims, wherein a minimum clutch torque which is used for starting the internal combustion engine (3) and which is to be at least set on the shift clutch (18) is determined from a temperature and/or a crankshaft position of the internal combustion engine (3), in particular when the internal combustion engine (3) is at standstill.

6. Method according to claim 5, wherein the minimum clutch torque is corrected upwards if the speed of the internal combustion engine (3) is greater than zero at the beginning of start-up or a time duration after a shutdown falls below a pre-specified time duration, wherein the greater the rotational speed at the beginning of start-up and/or the further the time duration falls below the pre-specified time duration, the greater the selected minimum clutch torque.

7. Drive apparatus (2) for a motor vehicle, in particular for performing the method according to one or more of the preceding claims, which drive apparatus has an internal combustion engine (3) and an electric engine (4), wherein a drive shaft (19) of the internal combustion engine (3) can be coupled to an engine shaft (17) of the electric engine (4) by means of a shift clutch (18), wherein the shift clutch (18) is open in a first shift state for decoupling the internal combustion engine (3) and the electric engine (4) and is closed in a second shift state for coupling the internal combustion engine (3) and the electric engine (4), wherein the drive apparatus (2) is designed, when a switch occurs from the first shift state to the second shift state, to first perform a first operating mode in which a clutch setpoint torque set on the shift clutch (18) is determined by means of closed-loop control,
wherein the drive apparatus (2) is further designed, when a speed difference gradient of a speed difference between the speed of the drive shaft (19) and the speed of the engine shaft (17) falls below a threshold value and when the speed difference exceeds a speed difference threshold value, to change from the first operating mode to a second operating mode, wherein the speed difference threshold value is a speed difference between the speed of the drive shaft (19) and the speed of the engine shaft (17) when a switch occurs from the first shift state to the second shift state, wherein the clutch setpoint torque set on the shift clutch (18) is determined in the second operating mode independently of the speed of the internal combustion engine (3) and the speed of the electric engine (4) by means of open-loop control, wherein the open-loop control increases the clutch setpoint torque continuously and with a constant gradient on the basis of a time-dependent torque curve.

## Revendications

1. Procédé de fonctionnement d'un appareil de propulsion (2) pour un véhicule automobile, qui présente un moteur à combustion interne (3) et un moteur électrique (4), dans lequel un arbre d'entraînement (19) du moteur à combustion interne (3) peut être couplé au moyen d'un embrayage (18) à un arbre de moteur (17) du moteur électrique (4), dans lequel l'embrayage (18) est ouvert dans un premier état de commutation pour le découplage du moteur à combustion interne (3) et du moteur électrique (4) et est fermé dans un second état de commutation pour le couplage du moteur à combustion interne (3) et du moteur électrique (4), dans lequel pour une commutation du premier état de commutation dans le second état de commutation, tout d'abord un premier type de fonctionnement est réalisé, dans lequel un couple de consigne d'embrayage réglé sur l'embrayage (18) est déterminé au moyen d'une régulation, dans lequel lors de la non-atteinte d'une valeur seuil par un gradient de différence de vitesse de rotation entre la vitesse de rotation de l'arbre d'entraînement (19) et la vitesse de rotation de l'arbre de moteur (17) et lors du dépassement d'une valeur seuil de différence de vitesse de rotation par la différence de vitesse de rotation, on passe du premier type de fonctionnement à un second type de fonctionnement, dans lequel la valeur seuil de différence de vitesse de rotation est une différence de vitesse de rotation se produisant lors d'une introduction de la commutation du premier état de commutation dans le second état de commutation entre la vitesse de rotation de l'abre d'entraînement (19) et la vitesse de rotation de l'arbre de moteur (17), dans lequel le couple de consigne d'embrayage réglé sur l'embrayage (18) est déterminé dans le second type de fonctionnement indépendamment de la vitesse de rotation du moteur à combustion interne (3) et de la vitesse de rotation du moteur électrique (4) au moyen d'une commande, dans lequel la commande augmente le couple de consigne d'embrayage à l'aide d'une courbe de couple dépendant du temps en continu et avec une pente constante.

2. Procédé selon la revendication 1, dans lequel la régulation est effectuée et/ou est précommandée en utilisant un organe de régulation P et/ou un organe de régulation I.

3. Procédé selon l'une quelconque des revendications précédentes, dans lequel pour une différence de vitesse de rotation plus petite entre la vitesse de rotation de l'arbre d'entraînement (19) et la vitesse de rotation de l'arbre de moteur (17) une pente plus grande est utilisée que pour une différence de vitesse de rotation plus grande.

4. Procédé selon l'une quelconque des revendications précédentes, dans lequel après le passage dans le deuxième type de fonctionnement, celui-ci est réalisé au-delà d'un certain intervalle et on passe ensuite dans le premier type de fonctionnement ou le second type de fonctionnement est réalisé jusqu'à atteindre le second état de commutation.

5. Procédé selon l'une quelconque des revendications précédentes, dans lequel un couple minimal d'embrayage à régler au niveau de l'embrayage (18), utilisé pour démarrer le moteur à combustion interne (3) est calculé à partir d'une température et/ou d'une position de vilebrequin du moteur à combustion interne (3) se trouvant en particulier à l'arrêt du moteur à combustion interne (3).

6. Procédé selon la revendication 5, dans lequel le couple minimal d'embrayage est corrigé vers le haut lorsque la vitesse de rotation du moteur à combustion interne (3) est au début du démarrage supérieure à zéro ou une durée après un arrêt n'atteint pas une durée de prescription, dans lequel plus le couple minimal d'embrayage est choisi grand, plus la vitesse de rotation au début du démarrage est élevée et/ou plus la durée est inférieure à la durée de prescription.

7. Dispositif d'entraînement (2) pour un véhicule automobile, en particulier pour la réalisation du procédé selon l'une ou plusieurs quelconques des revendications précédentes, qui présente un moteur à combustion interne (3) et un moteur électrique (4), dans lequel un arbre d'entraînement (19) du moteur à combustion interne (3) peut être couplé au moyen d'un embrayage (18) à un arbre de moteur (17) du moteur électrique (4), dans lequel l'embrayage (18) est ouvert dans un premier état de commutation pour le découplage du moteur à combustion interne (3) et du moteur électrique (4) et est fermé dans un second état de commutation pour le couplage du moteur à combustion interne (3) et du moteur électrique (4), dans lequel le dispositif d'entraînement (2) est réalisé afin de réaliser lors d'une commutation du premier état de commutation dans le second état de commutation, tout d'abord un premier type de fonctionnement, dans lequel un couple de consigne d'embrayage réglé sur l'embrayage (18) est déterminé au moyen d'une régulation,
dans lequel le dispositif d'entraînement (2) est en outre réalisé afin de passer lors de la non-atteinte d'une valeur seuil par un gradient de différence de vitesse de rotation d'une différence de vitesse de rotation entre la vitesse de rotation de l'arbre d'entraînement (19) et la vitesse de rotation de l'arbre de moteur (17) et lors du dépassement d'une valeur seuil de différence de vitesse de rotation par la différence de vitesse de rotation, on passe du premier type de fonctionnement à un second type de fonctionnement, dans lequel la valeur seuil de différence de vitesse de rotation est une différence de vitesse de rotation se produisant lors d'une introduction de la commutation du premier état de commutation dans le second état de commutation entre la vitesse de rotation de l'arbre d'entraînement (19) et la vitesse de rotation de l'arbre de moteur (17), dans lequel le couple de consigne d'embrayage réglé sur l'embrayage (18) est déterminé dans le second type de fonctionnement indépendamment de la vitesse de rotation du moteur à combustion interne (3) et de la vitesse de rotation du moteur électrique (4) au moyen d'une commande, dans lequel la commande augmente le couple de consigne d'embrayage à l'aide d'une courbe de couple dépendant du temps en continu et avec une pente constante.
